# EUROPEAN PATENT APPLICATION

(11) **EP 4 597 455 A1**
(43) Date of publication of application: **06.08.2025**
(21) Application number: 25156019.9
(22) Date of filing: 05.02.2025
(51) Int. Cl.: G06V 20/52, G06V 10/82, G06V 10/70

(54) **DETECTION OF ELECTRONICS AND/OR LIQUIDS AT A SECURITY CHECKPOINT, USING IMAGE PROCESSING**

(30) Priority: 05.02.2024 IL 31066424
(71) Applicant: Seetrue Screening Ltd, 6879139 Tel Aviv (IL)
(72) Inventor: FRENKEL, Assaf, 4703612 Ramat Hasharon (IL); MARCIANO, Abraham, Jerusalem (IL); AIZENSHTEIN, Sofia, 6789156 Tel Aviv (IL)
(74) Representative: Mewburn Ellis LLP

(57) **Abstract**

There are provided systems and methods comprising obtaining an image acquired by an acquisition device, using the image and a first machine learning model to determine whether (i) or (ii) is met in the image: (i) at least one electronic device of a first category is present within, below, or on luggage of a second category; (ii) at least one electronic device of the first category is present, wherein said at least one electronic device is not located within, below, or on luggage of the second category; responsive to a determination that (i) is met, triggering an alarm of a first type; responsive to a determination that (ii) is met, using at least part of the image and an algorithm different from the first machine learning model to determine whether a suspicious element is present in the at least part of the image.

## Description

### TECHNOLOGICAL FIELD

The invention is in the field of detection of objects at a security checkpoint, using image processing.

### BACKGROUND

At a security checkpoint (for example in an airport), an acquisition device is used in order to acquire an image of an item carried by a person. The image can be verified by an operator and/or by a computerized system in order to detect the presence of a prohibited object. Malicious persons use various techniques in order to prevent detection of the prohibited object in their items.

There is therefore a need to propose new systems and methods in this technical field.

### GENERAL DESCRIPTION

In accordance with certain aspects of the presently disclosed subject matter, there is provided a system comprising one or more processing circuitries configured to obtain an image acquired by an acquisition device, use the image and a first machine learning model to determine whether (a) or (b) is met in the image: (a) at least one electronic device of a first category is present within, below, or on luggage of a second category, (b) at least one electronic device of the first category is present, wherein said at least one electronic device is not located within, below, or on luggage of the second category, responsive to a determination that (a) is met, trigger an alarm of a first type, responsive to a determination that (b) is met, use at least part of the image and an algorithm different from the first machine learning model to determine whether a suspicious element is present in the at least part of the image.

In addition to the above features, the system according to this aspect of the presently disclosed subject matter can optionally comprise one or more of features (i) to (xxxvii) below, in any technically possible combination or permutation:
i. responsive to a determination that (b) is met, the system is configured to feed a sub-part of the image to the algorithm, wherein said sub-part corresponds to a location of the at least one electronic device in the image;
ii. responsive to a determination of a presence of a suspicious element in the image, the system is configured to trigger an alarm of a second type, different from said first type;
iii. the algorithm comprises a second machine learning model, distinct from the first machine learning model;
iv. the first category comprises laptops;
v. the first category comprises at least one of: tablets, hairdryers, straighteners, speakers, cameras, docking stations, irons, e-readers, or game consoles;
vi. the first machine learning model is configured to classify a scenario in which a laptop is located within, below, or on a bag specifically designed for laptops, as a scenario in which the laptop is not present within, below, or on luggage of the second category;
vii. responsive to a determination that (b) is met, the system is configured to transmit data informative of a location of the electronic device of the first category to the algorithm;
viii. the algorithm is configured to use the data to determine whether a suspicious element is present in the image;
ix. responsive to a determination that (b) is met, and to a determination that at least one electronic device of the first category is present in the image, the system is configured to transmit data informative of a type of the electronic device of the first category to the algorithm;
x. the algorithm is configured to use the data to determine whether a suspicious element is present in the image;
xi. responsive to a determination that (a) and (b) are met, the system is configured to both trigger an alarm of the first type and use at least part of the image and the algorithm to determine whether a suspicious element is present in the at least part of the image;
xii. responsive to a determination that (b) is met, and to a determination of a type of the at least one electronic device, the system is configured to use said type to select a given algorithm among a plurality of algorithms, and to use said given algorithm to determine whether a suspicious element is present in the image;
xiii. the given algorithm has been trained with images comprising electronic devices of said type;
xiv. the alarm of the first type is operative to inform an operator that an electronic device of the first category has to be displaced;
xv. responsive to a determination that (a) is met, the system is configured to output information on a type of the electronic device that has been detected;
xvi. responsive to a determination that (a) is met, the system is configured to output data informative of a location of the at least one electronic device that has been detected in the image;
xvii. responsive to a determination that (a) is met, the system is configured to output a total number of one or more electronic devices of the first category, each present in, below, or on luggage of the second category;
xviii. the first machine learning model has been trained with training images including one or more electronic devices of the first category, and associated with a label indicative of a position of the one or more electronic devices of the first category, training images including one or more luggage items of the second category, and associated with a label indicative of a position of the one or more luggage items of the second category;
xix. for an image comprising an electronic device of the first category, and luggage of the second category, the first machine learning model is configured to determine a first location of the electronic device, a second location of the luggage, wherein the first machine learning model or the system is configured to compare the first location with the second location to determine whether (a) or (b) is met;
xx. the first machine learning model has been trained with training images including at least one electronic device of a first category present within, below, or on luggage of a second category, associated with a first label and training images in which at least one electronic device of the first category is present, but which is not located within, below, or on luggage of the second category, associated with a second label, different from the first label;
xxi. responsive to determination that neither (a) nor (b) are met, the system is configured to not raise an alarm of the first type and not feed the image to the algorithm;
xxii. the system is configured to use the image and the first machine learning model to determine whether (e) or (f) is met in the image: (e) at least one electronic device of a first category is present within, below, or on an object of a third category, (f) at least one electronic device of the first category is present, wherein said at least one electronic device is not located within, below, or on an object of the third category, responsive to a determination that (e) is met, trigger an alarm and responsive to a determination that (f) is met, use at least part of the image and the algorithm to determine whether a suspicious element is present in the at least part of the image;
xxiii. the third category includes objects operative to mask, at least partially, an electronic device of the first category in the image;
xxiv. the system is configured to use said first machine learning model, or another machine learning model, to determine whether the image comprises a Liquid, an Aerosol, or a Gel which does not comply with a security criterion, and responsive to detection of a Liquid, an Aerosol, or a Gel which does not comply with the security criterion, trigger an alarm;
xxv. the system is configured to use said first machine learning model, or another machine learning model, to detect presence of at least one of a Liquid, an Aerosol, or a Gel, which has a capacity above a threshold, responsive to a detection of at least one of a Liquid, an Aerosol, or a Gel, which has a capacity above the threshold, trigger an alarm;
xxvi. the system is configured to use said first machine learning model, or another machine learning model, to detect presence of at least one of a Liquid, an Aerosol, or a Gel, with a capacity equal to or below an authorized threshold, located within or below luggage of a fourth category, responsive to a detection of at least one of a Liquid, an Aerosol, or a Gel with a capacity equal to or below the authorized threshold, located within or below luggage of the fourth category, trigger an alarm;
xxvii. the system is configured to use said first machine learning model, or another machine learning model, to detect presence of at least one of a Liquid, an Aerosol, or a Gel, with a capacity equal to or below an authorized threshold, located within or below authorized luggage, wherein, responsive to a detection of at least one of a Liquid, an Aerosol, or a Gel with a capacity equal to or below the authorized threshold, located within or below authorized luggage, the system is configured to not trigger an alarm;
xxviii. the authorized luggage includes a given type of transparent bag or a bag with one or more dimensions below one or more certain values;
xxix. the system is configured to use said first machine learning model, or another machine learning model, to detect presence of at least one of a Liquid, an Aerosol, or a Gel, and to differentiate between a Liquid, an Aerosol, or a Gel with a capacity equal to or below an authorized threshold, and a Liquid, an Aerosol, or a Gel with a capacity above an authorized threshold;
xxx. the system is configured to use said first machine learning model, or another machine learning model, to detect presence of at least one of a Liquid, an Aerosol, or a Gel, of a certain type, and to not trigger an alarm for this certain type;
xxxi. this certain type includes a lighter;
xxxii. the system is configured to use the image and the first machine learning model to determine whether (a), (b), (c) or (d) is met in the image: (a) at least one electronic device of the first category is present within, below, or on luggage of the second category; (b)at least one electronic device of the first category is present in the image, which is not located within, below, or on luggage of the second category; (c) the image comprises a Liquid, an Aerosol or a Gel which does not comply with a security criterion; (d) no Liquid, an Aerosol, or a Gel is present, or all of one or more Liquids, Aerosols, or Gels which are present are such that their presence meets the security criterion;
xxxiii. responsive to a determination that (a) or (c) is met, the system is configured to trigger at least one alarm;
xxxiv. responsive to a determination that (b) is met, the system is configured to use at least part of the image and the algorithm to determine whether a suspicious element is present in the at least part of the image;
xxxv. responsive to a determination that (i) is met, the system is configured to trigger an alarm of a first type;
xxxvi. responsive to a determination that (iii) is met, the system is configured to trigger an alarm of a third type; and
xxxvii. the suspicious element comprises an explosive.

In accordance with other aspects of the presently disclosed subject matter, there is provided a system comprising one or more processing circuitries configured to obtain an image acquired by an acquisition device, use the image and a first machine learning model to determine whether the image comprises a Liquid, an Aerosol, or a Gel which does not comply with a security criterion, and responsive to detection of a Liquid, an Aerosol, or a Gel which does not comply with the security criterion, trigger an alarm

In addition to the above features, the system according to this aspect of the presently disclosed subject matter can optionally comprise one or more of features (i) to (xxxvii) above, in any technically possible combination or permutation.

In accordance with other aspects of the presently disclosed subject matter, there is provided a method comprising, by one or more processing circuitries, obtaining an image acquired by an acquisition device, using the image and a first machine learning model to determine whether (a) or (b) is met in the image: (a) at least one electronic device of a first category is present within, below, or on luggage of a second category, (b) at least one electronic device of the first category is present, wherein said at least one electronic device is not located within, below, or on luggage of the second category, responsive to a determination that (a) is met, triggering an alarm of a first type, responsive to a determination that (b) is met, using at least part of the image and an algorithm different from the first machine learning model to determine whether a suspicious element is present in the at least part of the image.

In addition to the above features, the method according to this aspect of the presently disclosed subject matter can optionally comprise one or more of features (i) to (xxxvii) above, in any technically possible combination or permutation.

In accordance with other aspects of the presently disclosed subject matter, there is provided a non-transitory computer readable medium comprising instructions that, when executed by one or more processing circuitries, cause the one or more processing circuitries to perform a method comprising obtaining an image acquired by an acquisition device, using the image and a first machine learning model to determine whether (a) or (b) is met in the image: (a) at least one electronic device of a first category is present within, below, or on luggage of a second category, (b) at least one electronic device of the first category is present, wherein said at least one electronic device is not located within, below, or on luggage of the second category, responsive to a determination that (a) is met, trigger an alarm and responsive to a determination that (b) is met, use at least part of the image and an algorithm different from the first machine learning model to determine whether a suspicious element is present in the at least part of the image.

In addition to the above features, the method according to this aspect of the presently disclosed subject matter can optionally comprise one or more of features (i) to (xxxvii) above, in any technically possible combination or permutation.

In accordance with other aspects of the presently disclosed subject matter, there is provided a non-transitory computer readable medium comprising instructions that, when executed by one or more processing circuitries, cause the one or more processing circuitries to perform a method comprising: obtaining an image acquired by an acquisition device, using the image and a first machine learning model to determine whether the image comprises a Liquid, an Aerosol, or a Gel which does not comply with a security criterion, and responsive to a detection of a Liquid, an Aerosol, or a Gel which does not comply with the security criterion, triggering an alarm.

In addition to the above features, the method according to this aspect of the presently disclosed subject matter can optionally comprise one or more of features (i) to (xxxvii) above, in any technically possible combination or permutation.

In accordance with other aspects of the presently disclosed subject matter, there is provided a non-transitory computer readable medium comprising instructions that, when executed by one or more processing circuitries, cause the one or more processing circuitries to perform a method comprising using the image and the first machine learning model to determine whether (i), (ii), (iii) or (iv) is met in the image: (i) at least one electronic device of the first category is present within, below, or on luggage of the second type; (b) at least one electronic device of the first category is present, wherein said at least one electronic device is not located within, below, or on luggage of the second category; (c) the image comprises a Liquid, an Aerosol, or a Gel which does not comply with a security criterion; (d)no Liquid, Aerosol, or Gel is present, or all of one or more Liquids, Aerosols, or Gels which are present are such that their presence meets the security criterion, responsive to a determination that (a) or (c) is met, triggering at least one alarm, responsive to a determination that (b) is met, using at least part of the image and an algorithm to determine whether a suspicious element is present in the at least part of the image.

In addition to the above features, the method according to this aspect of the presently disclosed subject matter can optionally comprise one or more of features (i) to (xxxvii) above, in any technically possible combination or permutation.

According to some embodiments, the proposed solution enables automatic screening at a security checkpoint.

According to some embodiments, the proposed solution enables efficient screening at a security checkpoint.

According to some embodiments, the proposed solution increases safety of persons and/or passengers.

According to some embodiments, the proposed solution enables complying with airport regulations in a more efficient way.

According to some embodiments, the proposed solution improves accuracy of detection of prohibited objects, while being computationally efficient.

According to some embodiments, the proposed solution detects prohibited objects in real time or quasi real time.

According to some embodiments, the proposed solution is adaptive to different types of acquisition systems.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
- **Fig. 1** illustrates an architecture of a system according to some examples of the invention;
- **Fig. 2A** illustrates an example of luggage and laptop placement which is forbidden at an airport security checkpoint;
- **Fig. 2B** illustrates an example of luggage and laptop placement which is authorized at an airport security checkpoint;
- **Figs. 3** and **4** illustrate a method enabling, at a security checkpoint, automatic screening of items of a passenger, which can include one or more electronic devices;
- **Figs. 5** to **8B** illustrate examples of the usage of the method of **Figs. 3** and **4****;**
- **Fig. 9A** illustrates another method enabling, at a security checkpoint, automatic screening of items of a passenger, which can include one or more electronic devices;
- **Fig. 9B** illustrates an example of item placement which may be forbidden at an airport security checkpoint;
- **Fig. 9C** illustrates an example of item placement which is authorized at an airport security checkpoint;
- **Figs. 10A** to **10E** illustrate different examples of the presence of Liquids, Aerosols and Gels (designated in short as "LAGs"), some of them being forbidden at an airport security checkpoint, and some of them being authorized at an airport security checkpoint;
- **Fig. 11** illustrates another method enabling, at security checkpoint, automatic screening of items of a passenger, which can include one or more LAG(s);
- **Fig. 12** illustrates a method enabling detecting specific types of LAG(s) in the image;
- **Fig. 13** illustrates another method enabling, at a security checkpoint, automatic screening of items of a passenger, which can include one or more electronic devices and/or one or more LAG(s);
- **Fig. 14** illustrates a method of training a machine learning model to detect certain electronic devices and certain luggage;
- **Fig. 15** illustrates a method of training a machine learning model to detect, in an image, whether certain electronic devices are located within, below, or on certain luggage;
- **Fig. 16** illustrates a method of training a machine learning model to detect, in an image, LAG(s), to determine whether their capacity matches an authorized threshold, and to detect certain luggage;
- **Fig. 17** illustrates a method of training a machine learning model to detect, in an image, whether the presence of LAG(s) meets a security criterion;
- **Fig. 18** illustrates a method of training a machine learning model to detect, in an image, prohibited object(s); and
- **Fig. 19** illustrates a method of training a machine learning model to detect, in an image, the total number of electronic devices.

### DETAILED DESCRIPTION OF EMBODIMENTS

In the specification, reference will be made to "prohibited objects". This includes (but is not limited to) e.g., explosives, weapons (guns, knives, grenades, etc.), etc. Although a typical example of a prohibited object is a threat object, this is however not limitative. The prohibited objects can include any object considered as prohibited at a control or security checkpoint (according to rules set e.g., by an administrator of the security checkpoint and/or by law) and should therefore be detected. For example, a prohibited object in a facility can include e.g., a USB drive, a cellular phone, etc.

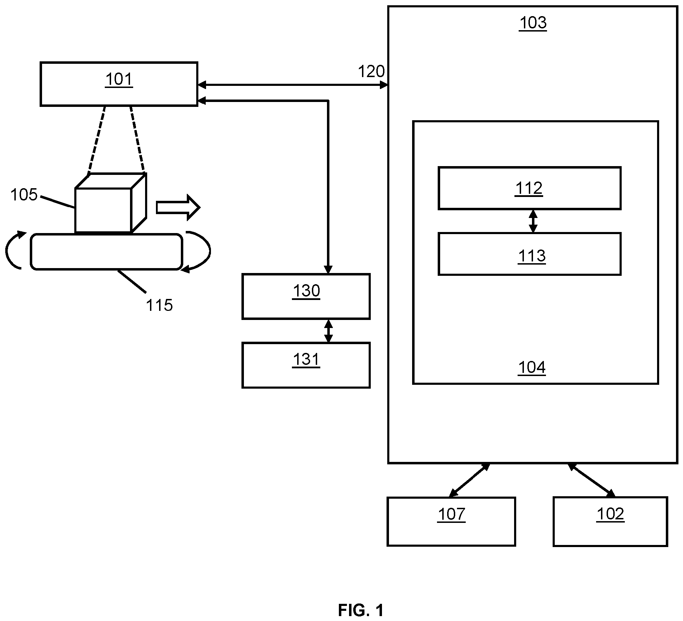

Attention is drawn to **Fig. 1****,** which illustrates a system **100** which can be used at a control or security checkpoint, such as in an airport. This is however not limitative, and the system **100** can be used in various other applications.

**Fig. 1** illustrates an acquisition device **101** (also called image acquisition device), which is operative to acquire one or more images of one or more items **105.**

Generally, the item **105** is placed on a conveyor belt **115,** which enables successive scanning of different items (or of the same item repetitively).

The acquisition device **101** includes for example an X-ray acquisition device, a scanner, a computerized tomography (CT) scan, or other types of acquisition devices (e.g., body scanner). The acquisition device **101** can also include a camera (operating e.g., in the visible range). This list is not limitative.

Generally, at the security checkpoint of an airport, item **105** includes a bin in which the passenger is requested to place at least some of his personal carry-ons, such as (but not limited to): a container, a bag, clothing items, a shoe, certain liquids, certain electronic devices, etc. These examples are not limitative.

The acquisition device **101** generally includes (or is operatively coupled to) an output unit **130** (also called display unit **130),** in which an operator can visualize the images acquired by the acquisition device **101.** The acquisition device **101** generally includes (or is operatively coupled to) an interface **131** (e.g., hardware interface, such as a keyboard) enabling interaction by an operator with the acquisition device **101** and/or with the conveyor belt **115.** This interaction can include generating commands enabling control of the operation of the acquisition device **101** and/or the conveyor belt **115.**

The acquisition device **101** is operatively connected to a computer-implemented system **103.** System **103** can be part of the acquisition device **101,** or external to the acquisition device **101,** or partially part of the acquisition device **101** and partially external to it. System **103** is operative to receive one or more image(s) **120** of the one or more item(s) **105** (or data informative of the image(s) **120)** acquired by the acquisition device **101.** The image(s) **120** can be associated with metadata, such as date/time of the image, parameters of the acquisition (zoom, color), etc.

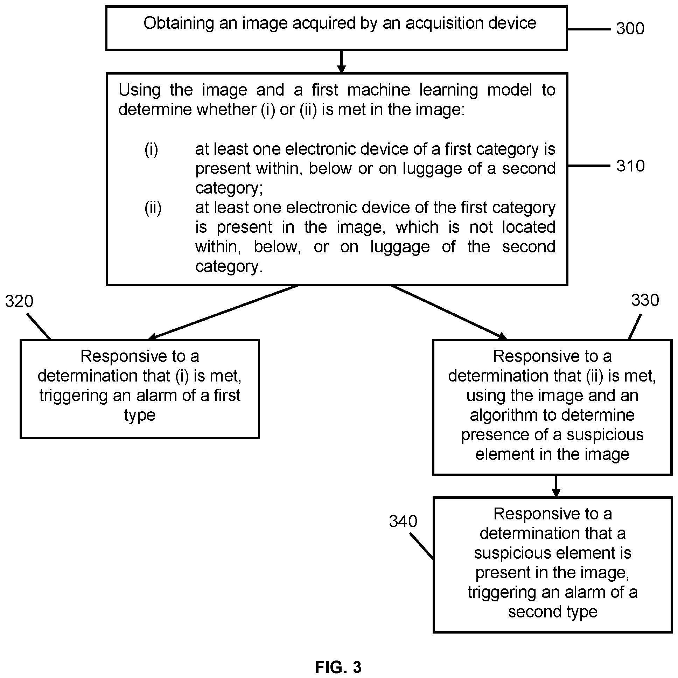

System **103** includes at least one processing circuitry **104** (or a plurality of processing circuitries **104),** including one or more processors and one or more memories. The processing circuitry **104** is configured to provide processing necessary for operating system **103,** as further detailed in the various embodiments described hereinafter. System **103** can be used to perform various methods described hereinafter, such as (but not limited to) the methods described with reference to **Figs. 3****,** **4****,** **9A****,** **11****,** **12****,** and **13** to **19.**

In **Fig. 1****,** system **103** is coupled to a hardware-based input interface **102** (e.g., a keyboard) which can be used e.g., by an operator to interact with system **103.**

The processing circuitry **104** can be configured to implement a first algorithm **112,** such as a first machine learning model **112.** In particular, a list of computer-readable instructions (e.g., an executable code/executable program) stored in a computer memory, when executed by the processing circuitry **104,** enables execution of the first machine learning model **112.**

The processing circuitry **104** can be configured to implement a second algorithm **113,** such as a second machine learning model **113.** In particular, a list of computer-readable instructions (e.g., an executable code/executable program) stored in a computer memory, when executed by the processing circuitry **104,** enables execution of the second machine learning model **113.** The second machine learning model **113** can be distinct from the first machine learning model **112.**

The first machine learning model **112** and/or the second machine learning model **113** can include, for example, a neural network, such as a deep neural network (DNN). Examples of machine learning models include Convolutional Neural Network (CNN), or specific types of CNN such as, R-CNN, Region-Based Convolutional Neural Networks, Fast R-CNN, and YOLO (You Only Look Once - which is a type of Fast R-CNN), etc. This is not limitative and other machine learning models can be used.

A deep neural network (DNN) comprises layers organized in accordance with a respective DNN architecture. Optionally, at least some of the layers can be organized in a plurality of DNN sub-networks. Each layer of the ML (Machine Learning) model can include multiple basic computational elements (CE), typically referred to in the art as dimensions, neurons, or nodes.

Generally, computational elements of a given layer can be connected with CEs of a preceding layer and/or a subsequent layer. Each connection between a CE of a preceding layer and a CE of a subsequent layer is associated with a weighting value. A given CE can receive inputs from CEs of a previous layer via the respective connections, each given connection being associated with a weighting value which can be applied to the input of the given connection. The weighting values can determine the relative strength of the connections and thus the relative influence of the respective inputs on the output of the given CE. The given CE can be configured to compute an activation value (e.g., the weighted sum of the inputs) and further derive an output by applying an activation function to the computed activation. The activation function can be, for example, an identity function, a deterministic function (e.g., linear, sigmoid, threshold, or the like), a stochastic function, or other suitable function. The output from the given CE can be transmitted to CEs of a subsequent layer via the respective connections. Likewise, as above, each connection at the output of a CE can be associated with a weighting value which can be applied to the output of the CE prior to being received as an input of a CE of a subsequent layer. Further to the weighting values, there can be threshold values (including limiting functions) associated with the connections and CEs.

The weighting and/or threshold values of the DNN can be initially selected prior to training, and can be further iteratively adjusted or modified during training to achieve an optimal set of weighting and/or threshold values in a trained ML network. After each iteration, a difference (also called loss function) can be determined between the actual output produced by the ML network, and the label or class associated with the respective training set of data. The difference can be referred to as an error value. Training can be determined to be complete when a cost or loss function indicative of the error value is less than a predetermined value, or when a limited change in performance between iterations is achieved. Optionally, at least some of the ML subnetworks (if any) can be trained separately, prior to training the entire ML network.

A set of ML network input data used to adjust the weights/thresholds of a deep neural network is referred to hereinafter as a training set.

According to some examples, the first algorithm **112** and/or the second algorithm **113** can implement a segmentation algorithm (e.g., a semantic segmentation algorithm, such as, but not limited to, U-net, Mask-RCNN), and/or an object detection algorithm (such as, but not limited to, R-CNN, Region-Based Convolutional Neural Networks, Fast R-CNN, and YOLO (You Only Look Once), etc.).

This is not limitative, and other algorithms adapted to detect prohibited objects/suspicious elements in images can be used.

Upon processing the image **120,** system **103** can send (using an adapted interface) data informative of the output of the processing to a device **107** enabling a visual and/or audio representation of the processing. Device **107** includes, e.g., a screen and/or a loudspeaker. In some embodiments, system **103** can trigger an alert and/or send instructions to another device to trigger an alert. The alert can be transmitted, for example, to a personal device of an operator, such as a cellphone, a laptop, a tablet, etc.

It is noted that at least part of system **103** illustrated in **Fig. 1** can be implemented in a distributed computing environment, in which the aforementioned functional modules shown in **Fig. 1** can be distributed over several local and/or remote devices and can be linked through a communication network.

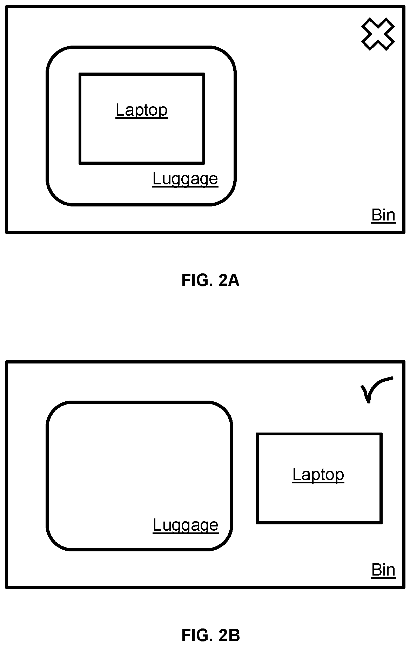

Attention is now drawn to **Figs. 2A** and **2B****.**

At the security checkpoint of an airport, the passengers are required to place their bags (checked baggage) in a bin on a conveyor belt (see **115** in **Fig. 1****),** for scanning by the acquisition device (see **101** in **Fig. 1****).**

Regulations (which can vary between the countries) require passengers to take their laptops and certain other electronic devices out of their hand luggage, so that they can be screened separately. Note that the regulation can evolve over time, and the proposed solution is adaptive to this evolution.

**Fig. 2A** illustrates a scenario which does not comply with regulations. In this example, a laptop is present inside the hand luggage, which is itself placed in a bin.

**Fig. 2B** illustrates a scenario which complies with regulations, since the laptop is not placed within the hand luggage, but directly in the bin.

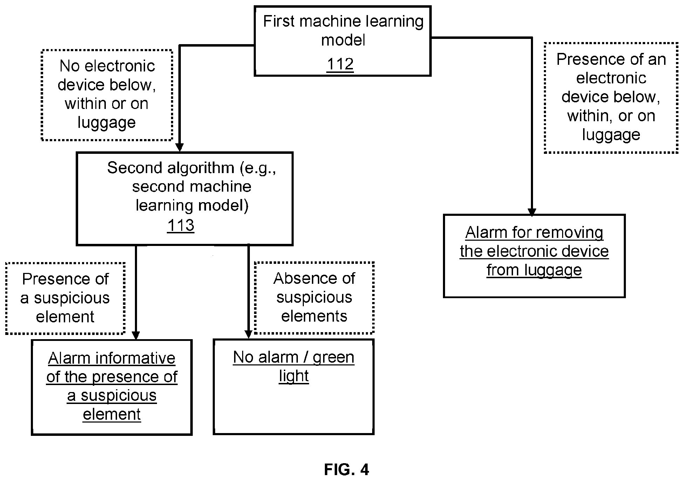

Attention is now drawn to **Figs. 3** and **4****.**

The method of **Fig. 3** includes obtaining (operation **300)** at least one or more images of an item (see reference **105** in **Fig. 1****)** acquired by an acquisition device (see reference **101** in **Fig. 1****).**

In some examples, before performing the additional operations of the method of **Fig. 3****,** an initial analysis of the image can be performed. The whole image (or data informative thereof) can be fed to an algorithm (such as a trained machine learning model) operative to detect the presence of prohibited objects (such as weapons, knives, etc.). The additional operations of the method of **Fig. 3** enables detecting suspicious elements which may have been concealed using electronic devices, and which may have been missed in the initial analysis of the image.

The method of **Fig. 3** further includes (operation **310)** feeding the image (or data informative thereof) to the first machine learning model **112.**

The first machine learning model **112** can output different data informative of the item **105** which is currently screened.

In at least some cases, the first machine learning model **112** can determine that at least one electronic device of a first category (examples of the first category are provided hereinafter) is present within, below, or on luggage of a second category (examples of the second category are provided hereinafter). This scenario corresponds e.g., to the scenario of **Fig. 2A****,** which is prohibited according to the airport regulations. For the sake of simplicity, this scenario is designated as (i) hereinafter.

In at least some cases, the first machine learning model **112** can determine that at least one electronic device of the first category is present in the image, which is not located within, below, or on luggage of the second category. In other words, the image contains an electronic device of the first category which is not masked by a luggage item of the second category. It can occur that the first machine learning model **112** detects a plurality of electronic devices of the first category, each of them being such that they are not placed within, below or on a luggage item of the second category.

For the sake of simplicity, this scenario is designated as (ii) hereinafter. This scenario corresponds e.g., to the scenario of **Fig. 2B****,** which is allowed according to airport regulations.

Note that the case in which the electronic device is partially masked by luggage of the second category can be treated either as scenario (i) or as scenario (ii): this can be defined during the training of the first machine learning model **112,** depending e.g., on the regulation and/or preferences of the user.

Note that it can occur that both scenario (i) and scenario (ii) are present simultaneously in the image: for example, a first electronic device of the first category is located below, within or on luggage of the second category, and a second electronic device of the first category is not located below, within or on luggage of the second category. This will be discussed hereinafter.

Note that in an X-ray image, there is no real difference between an object located "on" the luggage, "within" the luggage or "below" the luggage, since, in all cases, the X-rays are attenuated by the luggage before reaching the detector of the X-ray machine, thereby making the object less visible in the image (and thereby rendering detection of prohibited objects, such as explosives, more difficult).

The first category of electronic devices can be defined depending on the regulations and/or based on the input of an operator of the system.

According to some examples, the first category of electronic devices includes laptops. The first machine learning model **112** is therefore configured to detect presence of laptops within, below, or on luggage (of the second category).

According to some examples, the first category of electronic devices includes at least one of: laptops, tablets, hairdryers, straighteners, speakers, cameras, docking stations, irons, e-readers or game consoles. For each of these electronic devices, it is possible to define certain parameters of the electronic device for which it is considered as belonging to the first category. For example, cameras with a certain size can be considered as belonging to the first category, whereas cameras smaller than this certain size can be considered as not belonging to the first category. This is not limitative. The first machine learning model **112** is therefore configured to detect presence of these electronic devices of the first category within, below, or on luggage (of the second category).

The second category of luggage can be defined depending on the regulations and/or based on the input of an operator of the system.

According to some examples, the second category of luggage can include various types of luggage that can be carried by a passenger at a security check point as cabin/hand luggage: bags, suitcase, rolling bags, backpacks, garment bags, duffel bags, briefcases, totes, etc.

According to some examples, the second category of luggage does not include a bag specifically designed for laptops. Bags specifically designed for laptops are sometimes called laptop bags or laptop backpacks. It generally includes a well-padded, dedicated compartment in which the laptop is inserted for its protection. It may include further compartments to carry additional accessories of the laptop.

In at least some countries, it is allowed to keep the laptop in its laptop bag during screening by the acquisition device, which is why the second category may exclude laptop bags. Therefore, the first machine learning model **112** can be configured to detect presence of a laptop in a bag specifically designed for laptops, and to classify this scenario as a scenario (ii) (in which the image can be further processed by the second algorithm **113,** for detecting prohibited objects, as explained hereinafter).

According to some examples, the second category does not include transparent bags. Therefore, the first machine learning model **112** can be configured to detect presence of a laptop in a transparent bag, and to classify this scenario as scenario (ii) (in which the image can be further processed by the second algorithm **113,** for detecting prohibited objects).

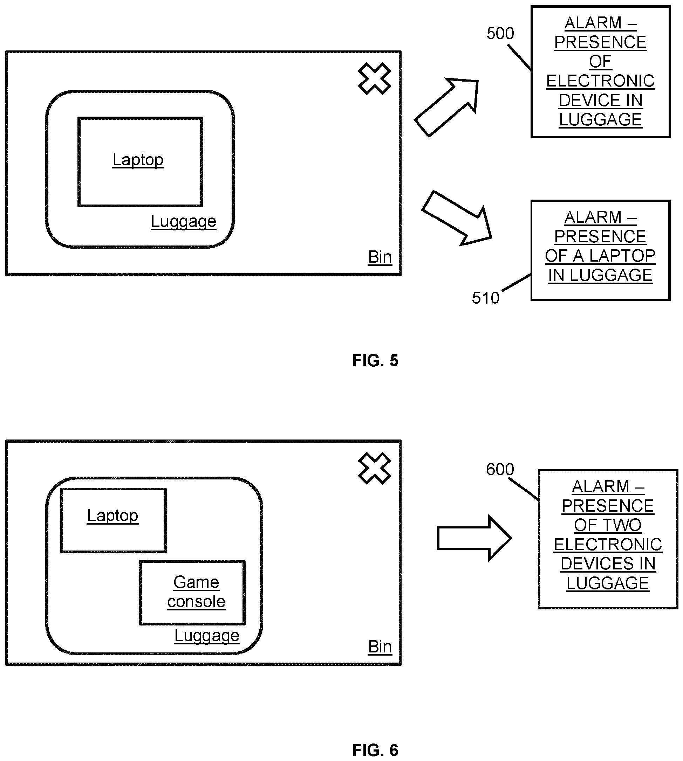

The method of **Fig. 3** further includes (operation **320),** responsive to a determination that (i) is met, triggering an alarm of a first type. The alarm can be configured to inform an operator that an electronic device of the first category is located within luggage of the second category (or below the luggage, or on the luggage). This alarm can be used to indicate that an electronic device of the first category has to be removed from luggage of the second category. The alarm can correspond to a textual and/or audio and/or video alarm. A non-limitative example of an alarm is depicted as reference **500** in **Fig. 5****,** which can be output to an operator.

In some examples, responsive to a determination that (i) is met, the method can include outputting information on the type of the electronic device that has been detected in luggage. Non-limitative examples of types include laptops, tablets, hairdryers, straighteners, speakers, cameras, docking stations, irons, e-readers, or game consoles. The type can be displayed to the operator. This helps the operator to verify in a more convenient way which electronic device should be removed by the passenger from the luggage. A non-limitative example of such an alarm **510** is depicted in **Fig. 5****,** in which it is displayed to an operator that a laptop is present in luggage.

In some examples, responsive to a determination that (i) is met, the method can include outputting information on a number of one or more electronic devices of the first category, each present in luggage of the second category. A non-limitative example of such an alarm **600** is depicted in **Fig. 6****,** in which it is displayed to an operator that two electronic devices (of the first category) are present in luggage. Note that it can occur that several electronic devices of the first category are present in the same luggage (or below the same luggage, or on the same luggage), or in different luggage (or below different luggage, or on different luggage).

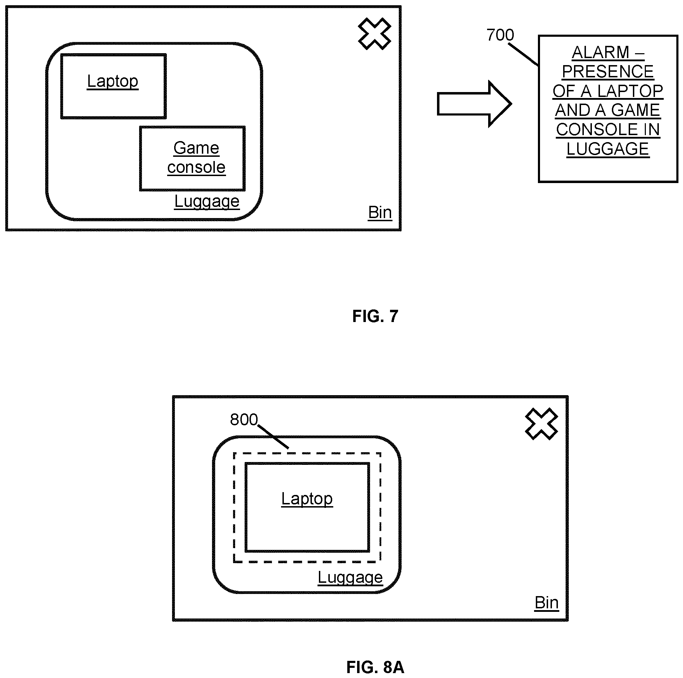

In some examples, responsive to a determination that (i) is met, the method can include outputting information on the different types of electronic devices that have been detected in luggage (or below luggage, or on luggage). A non-limitative example of such an alarm **700** is depicted in **Fig. 7****,** in which it is displayed to an operator that a laptop and a game console have been detected in the same luggage of the second category.

In some examples, responsive to a determination that (i) is met, the method can include displaying data informative of a location of the electronic device of the first category in the image. This helps the operator to understand the location of the electronic device, and facilitates his task of ensuring that this electronic device is removed from the luggage. In some examples, if a plurality of electronic devices of the first category have been detected, the location of each electronic device can be displayed to the operator.

A non-limitative example is depicted in **Fig. 8A****,** in which a bounding box **800** is displayed to an operator around the laptop present in the luggage, on the image acquired by the acquisition device.

In some examples, responsive to a determination that (ii) is met, the system does not raise an alarm at this stage. In particular, the system allows the image to be further processed. This can include feeding (operation **320)** at least part of the image to the second algorithm **113** (e.g., second machine learning model **113),** to determine presence of a suspicious element. This can be performed automatically, without requiring any intervention of the operator. Suspicious elements can include elements that correspond to anomalies in the image. An anomaly can correspond to an element which is generally not present in the image of an electronic device which is not associated with a prohibited object. As a consequence, the suspicious element(s) may correspond to prohibited object(s) and should therefore be indicated to the operator.

In particular, the suspicious elements may correspond to explosives concealed using the electronic device. In some cases, the suspicious elements may correspond to other types of prohibited objects, such as weapons or knives. Note that it can occur that suspicious elements detected by the second algorithm **113** do not correspond to prohibited object(s).

Once the second algorithm **113** has detected the presence of a suspicious element in the electronic device, an alarm of a second type can be raised (operation **340).** The operator, alerted by the alarm, can perform a manual inspection of the electronic device, to determine whether the suspicious element really corresponds to a prohibited object (or to an element which is not prohibited). In some examples, responsive to a determination that (ii) is met, a sub-part of the image is extracted from the image and transmitted to the second algorithm **113.** This sub-part corresponds to the location of the electronic device detected by the first machine learning model **112.** This can include cropping, from the image acquired by the acquisition device, the part of the image in which the electronic device is located. Note that if a plurality of electronic devices of the first category have been identified in the image (which are not masked by a luggage item of the second category), a plurality of sub-parts can be extracted from the image, each corresponding to the location of a different electronic device of the first category,

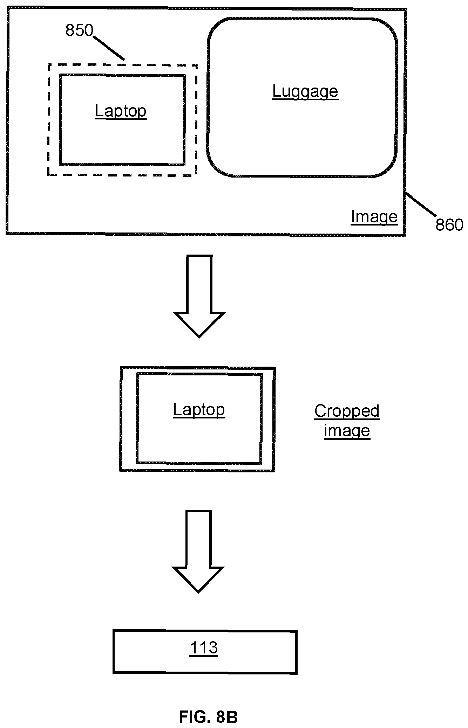

A non-limitative example is illustrated in **Fig. 8B****,** in which the sub-part **850** of the image **860,** corresponding to the location of a laptop which is not masked by luggage, is cropped from the original image **860,** and fed to the second algorithm **113,** for detecting suspicious elements.

Note that it is not mandatory to crop the original image. In some examples, when (ii) is met, the first machine learning model **112** determines the location of an electronic device of the first category in the image. Data informative of this location can be transmitted to the second algorithm **113,** which searches for suspicious elements only at this location of the image.

With the method of **Figs. 3** and **4****,** the search for suspicious elements by the second algorithm **113** is facilitated, since the electronic device is not masked by any luggage of the second category. Indeed, malicious persons can use laptops to hide explosives, or other objects (knives, etc.).

If neither scenario (i), nor scenario (ii) are met in the image, this indicates that no electronic device of the first category is present in the image. In this case, it is possible to avoid the step of further processing the image by the second algorithm **113.** It is however possible to process the images with other algorithms configured to detect prohibited objects such as weapons, etc.

As mentioned above, if the second algorithm **113** detects the presence of a suspicious element, an alarm of a second type can be raised (operation **340).** This alarm can indicate to the operator that a suspicious element is present. In some examples, it can indicate the location of the suspicious element in the image, an estimate of its type, or other attributes. If the second algorithm **113** does not detect the presence of any suspicious element, an alarm of the second type is not raised. The passenger may then be authorized to go through the security checkpoint with his electronic device.

In some examples, the part of the image corresponding to the electronic device of the first category (and present in luggage of the second category) is sent to a second algorithm **113** specifically trained to detect suspicious elements in electronic devices of the first category, whereas the rest of the image is sent to another second algorithm **113** (e.g., trained to detect prohibited objects in an image).

In some examples, the type of electronic device of the first category is identified by the first machine learning model **112** and is used to select a corresponding second algorithm **113.** For example, if a first type (e.g., laptop) of electronic device is identified, a second algorithm **113** is used to detect suspicious elements in the image (specifically trained with laptop images, in order to detect suspicious elements in laptops), and, if a second type (e.g., camera) of electronic device is identified, another second algorithm **113** is used to detect suspicious elements in the image (specifically trained with camera images, in order to detect suspicious elements in cameras). This can be generalized to N types of electronic devices (with N equal to or larger than two), which can be used to select a corresponding second algorithm **113** among N different algorithms. Each sub-part of the image corresponding to a certain type of electronic device is sent to a second algorithm **113** specifically trained to detect suspicious elements concealed using this certain type of electronic device.

In some examples, it can occur that a first type of electronic device has been detected at a first location of the image, and a second type of electronic device (different from the first type) has been detected at a second location of the image. A second algorithm **113** (specifically trained to detect suspicious elements in electronic devices of the first type) can be used to analyse the first location of the image, and another second algorithm **113** (specifically trained to detect suspicious elements in electronic devices of the second type) can be used to analyse the second location of the image.

In other examples, the type of electronic device identified by the first machine learning model **112** is transmitted to the second algorithm **113** to further improve detection of suspicious elements by the second algorithm **113.** It can be used as an attribute for the second algorithm **113.** For example, the types "laptop", "camera" or "hairdryer" can be identified and transmitted to the second algorithm **113.** These examples are not limitative.

When both scenario (i) and scenario (ii) are present simultaneously in the image (which means that a first electronic device of the first category is located below, within, or on luggage of the second type, and a second electronic device of the first category is present but is it not located below, within, or on luggage of the second type), it is possible to both raise an alarm of the first type, and to send to the second algorithm **113** the sub-part of the image corresponding to the second electronic device.

Alternatively, it is possible to raise an alarm of the first type, and to prevent sending the part of the image corresponding to the second electronic device to the second algorithm **113.** Once the passenger has removed the first electronic device from luggage, and new images are acquired, both the first electronic device and the second electronic device will be analyzed by the algorithm **113.**

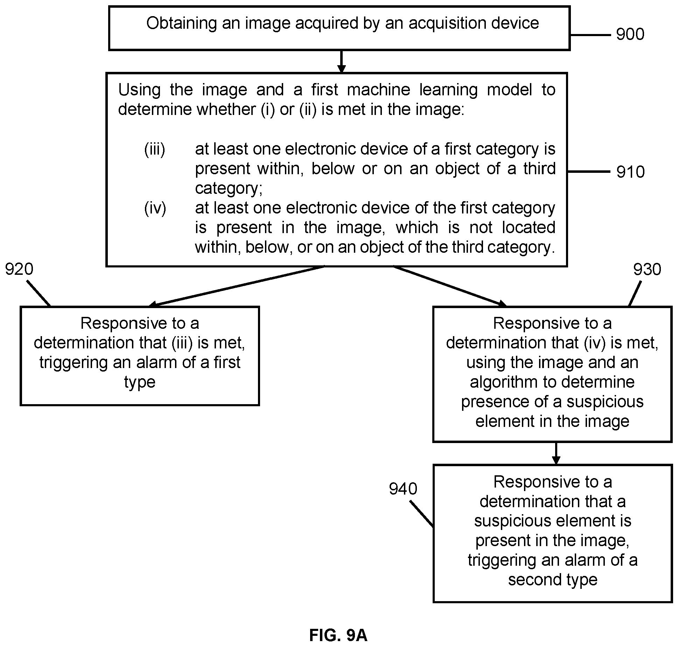

Attention is now drawn to **Fig. 9A****.**

In some cases, it can be aimed at detecting the presence of an electronic device of the first category (possible definitions of the first category have been provided above), located within, below, or on an object of a third category.

The third category can be broader than the second category defined above, and can include for example clothes, shoes, documents, some types of luggage (that is to say the second category as described with reference to **Fig. 3****)** or other objects which can mask, at least partially, the electronic device in the image acquired by the acquisition device.

In other words, this method takes into account not only interference of luggage in the image, but also of other objects. For example, the passenger may have put his coat on the laptop in the bin, which may cause an interference for detecting prohibited objects by the algorithm **113** in the laptop.

The exact definition of the third category of objects can be defined by a user and/or can be based on the airport regulations. The third category can be used during training of the first machine learning model **112.**

The method of **Fig. 9A** includes obtaining (operation **900)** an image of an item (see reference **105)** acquired by an acquisition device (see reference **101).**

The method of **Fig. 9A** further includes (operation **910)** feeding the image (or data informative thereof) to the first machine learning model **112.**

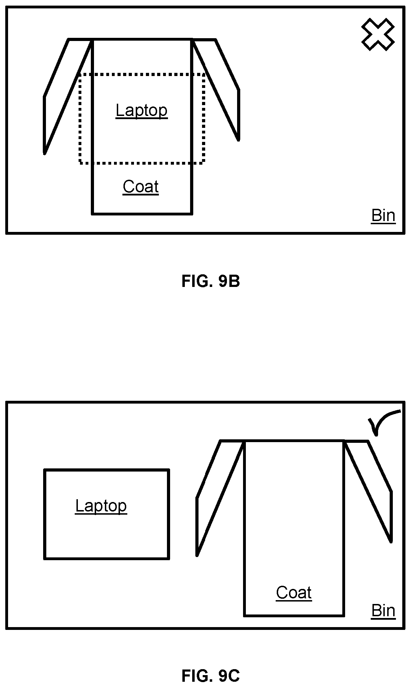

In at least some cases, the first machine learning model **112** can determine that at least one electronic device of a first category is present within, below, or on an object of the third category. This scenario corresponds, e.g., to the scenario of **Fig. 9B** (illustrating a laptop located under a coat), which is prohibited according to certain airport regulations. Note that this can also correspond to the scenario of **Fig. 2A****.** For the sake of simplicity, this prohibited scenario is designated as (iii) hereinafter.

In at least some cases, the first machine learning model **112** can determine that at least one electronic device of the first category is present in the image, which is not located within, below, or on an object of the third category. In other words, the image contains an electronic device of the first category (such as a laptop) which is not masked by any object of the third category. It can occur that the first machine learning model **112** detects a plurality of electronic devices of the first category, each of them being such that they are not placed within, below or on an object of the third category.

This scenario corresponds e.g., to the scenario of **Fig. 9C****,** which is allowed according to the airport regulation. Note that this can also correspond to the scenario of **Fig. 2B****.** This scenario is designated as (iv) hereinafter.

Note that the case in which the electronic device is partially masked by an object of the third category can be treated either as scenario (iii) or as scenario (iv): this can be defined during the training of the first machine learning model **112,** depending e.g., on the regulation and/or preferences of the user.

The method of **Fig. 9A** further includes (operation **920),** responsive to a determination that (iii) is met, triggering an alarm of a first type. The alarm is configured to inform an operator that an electronic device of the first category is masked by an object of the third category in the image. The alarm can correspond to a textual and/or audio and/or video alarm.

In some examples, the method can include outputting the type of the detected electronic device(s), the number of detected electronic device(s), and the location of the detected electronic device(s) in the image, as explained above in **Figs. 3** to **8****.**

In some examples, the method can include outputting the type of object masking the electronic device in the image. For example, it can be indicated that the object is an item of clothing or a bag.

In some examples, responsive to a determination that (iv) is met (an electronic device of the first category is present, but there is no interference by an object of the third category), the system does not raise an alarm. In other words, the system allows the image to be further processed. This can include feeding (operation **920)** at least part of the image to the second algorithm **113** (such as the second machine learning model **113),** to determine the presence of a suspicious element. This can be performed automatically, without requiring intervention of the operator. If the second machine learning model **113** detects the presence of a suspicious element, an alarm of a second type is raised (operation **940).** This alarm can indicate to the operator that a suspicious element is present. In some examples, it can indicate the location of the suspicious element in the image, an estimate of its type, or other attributes. The operator can then perform a manual inspection of the electronic device, to determine whether the suspicious element corresponds to a prohibited object (or to a false alarm). If the second machine learning model **113** does not detect the presence of any suspicious element, an alarm of the second type is not raised.

In some examples, when (iv) is met, the first machine learning model **112** determines the location of an electronic device of the first category in the image. Then, a sub-part of the image corresponding to this location is transmitted to the second algorithm **113** (whereas the rest of the image is not transmitted to the second algorithm **113** but can be processed using different algorithms). Alternatively, data informative of this location, together with the image, are transmitted to the second algorithm **113,** which searches for suspicious elements only at this location in the image.

In some examples, the second algorithm **113** is specifically trained for detecting suspicious elements in electronic devices of the first category.

In some examples, the type of electronic device of the first category is identified by the first machine learning model **112** and is used to select a corresponding second algorithm **113.** For example, if a first type (e.g., laptop) of electronic device is identified, a second algorithm **113** is used to detect prohibited objects in the image (specifically trained with laptop images, in order to detect suspicious elements in laptops) and if a second type (e.g., camera) of electronic device is identified, another second algorithm **113** is used to detect suspicious elements in the image (specifically trained with camera images, in order to detect suspicious elements in cameras). This can be generalized to N types of electronic devices (with N equal to or larger than two), which can be used to select a corresponding second algorithm **113** among N different algorithms. Each sub-part of the image corresponding to a certain type of electronic device is sent to a second algorithm **113** specifically trained to detect suspicious elements concealed using this certain type of electronic device.

In some examples, it can occur that a first type of electronic device has been detected at a first location of the image, and a second type of electronic device (different from the first type) has been detected at a second location of the image. A second algorithm **113** (specifically trained to detect suspicious elements in electronic devices of the first type) can be used to analyse the first location of the image, and another second algorithm **113** (specifically trained to detect suspicious elements in electronic devices of the second type) can be used to analyse the second location of the image.

In other examples, the type of electronic device identified by the first machine learning model **112** is transmitted to the second algorithm **113** to further improve detection of prohibited objects(s) by the second algorithm **113.** It can be used as an attribute for the second algorithm **113.** For example, the types "laptop", "camera" or "hairdryer" can be identified and transmitted to the second algorithm **113.** These examples are not limitative.

When both scenario (iii) and scenario (iv) are present simultaneously in the image (which means that a first electronic device of the first category is located below, within, or on an object of the third category, and a second electronic device of the first category is present but is it not located below, within, or on an of the third category), it is possible to both raise an alarm of the first type, and send to the second algorithm **113** the sub-part of the image corresponding to the second electronic device.

Alternatively, it is possible to raise an alarm of the first type, and to prevent sending the part of the image corresponding to the second electronic device to the second algorithm **113.** Once the passenger has removed the first electronic device from luggage, and new images are acquired, both the first electronic device and the second electronic device will be analyzed by the second algorithm **113.**

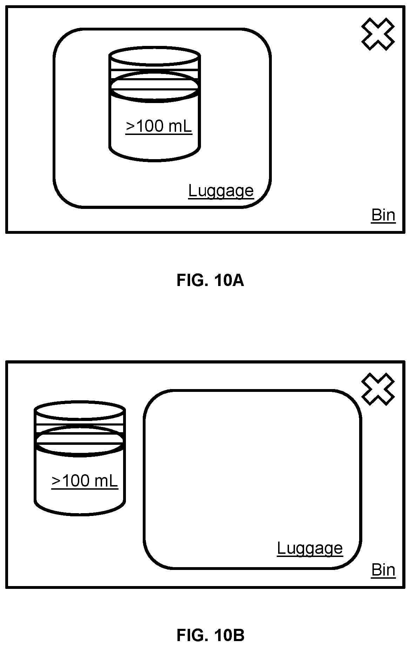

Attention is now drawn to **Figs. 10A** to **10C****.**

Certain authorities have set regulations on the presence of Liquids, Aerosols and Gels (designated in short as "LAGs") in hand luggage. Non-limitative examples of LAGs include drinks, soups, sauces, perfumes, deodorants (liquid or liquid-solid mixture), creams, balms, lotions, and oils.

LAGs with a capacity up to a certain threshold are authorized, whereas LAGs with a capacity greater than this threshold are forbidden (and cannot be taken by the passenger within the aircraft). Currently, the threshold is equal to 100 mL, but this value can change depending on the location and/or can evolve over time.

In addition to the capacity of the LAG, other rules can be set on their location during screening by the acquisition device, as explained hereinafter. Note that these rules are not limitative and can change over time and/or depending on the location.

**Fig. 10A** depicts a prohibited scenario, in which a LAG with a capacity above 100mL is present in luggage in the bin.

**Fig. 10B** depicts another prohibited scenario, in which a LAG with a capacity above 100mL is present in the bin, even if it is not located in luggage. Indeed, any LAG with a capacity above 100mL cannot be brought within the aircraft by a passenger.

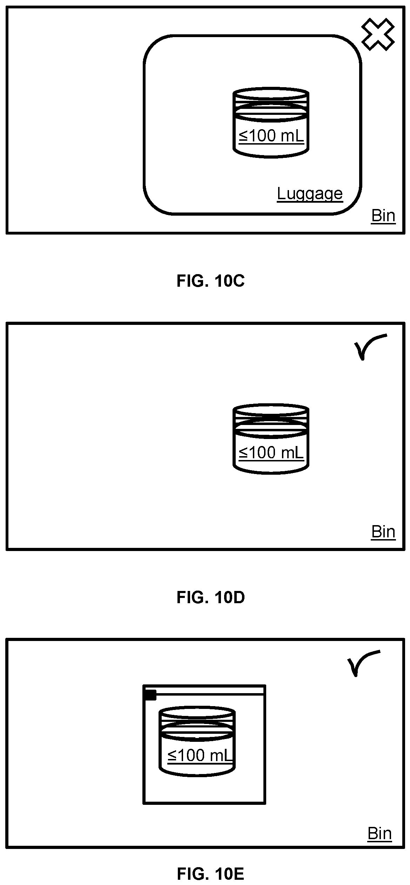

**Fig. 10C** depicts another prohibited scenario, in which a LAG with a capacity below 100mL is present in luggage. A reason for which this scenario is prohibited is that it may occur that the LAG has in fact a capacity above 100mL, but this could not be detected based on the images, since the LAG is masked by the luggage.

**Fig. 10D** depicts a permitted scenario, in which a LAG with a capacity below 100mL is present in the bin (without being located in luggage).

**Fig. 10E** depicts another permitted configuration, in which a LAG with a capacity below 100mL is present in a re-sealable, transparent plastic bag. Note that this can depend on the airports, and certain airports can consider this scenario as a prohibited scenario. This can be true also for other scenarios: their definition as a permitted scenario or as a prohibited scenario can depend on the airports.

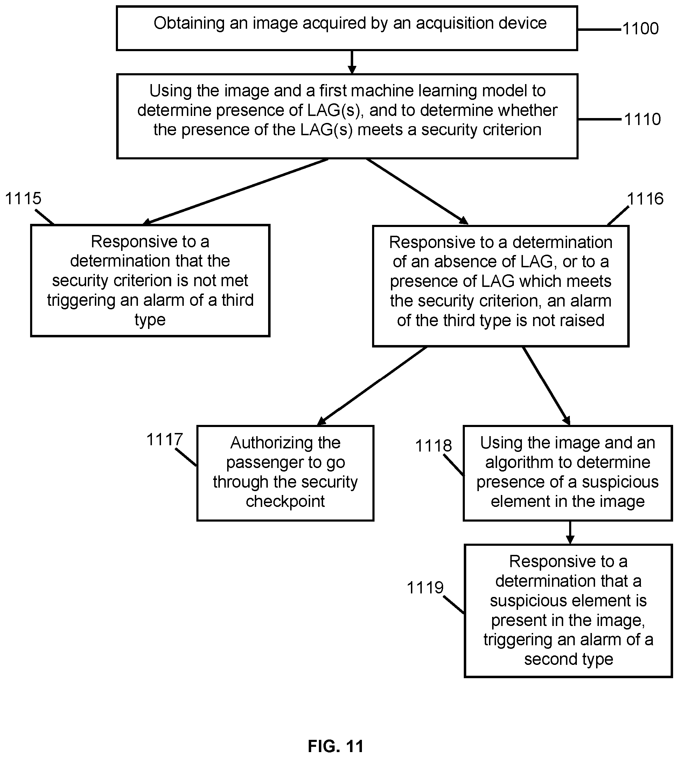

Attention is now drawn to **Fig. 11****.**

The method of **Fig. 11** includes obtaining (operation **1100)** an image of an item (see reference **105)** acquired by an acquisition device (see reference **101).**

The method of **Fig. 11** further includes (operation **1110)** feeding the image (or data informative thereof) to the first machine learning model **112,** or to another machine learning model (distinct from the first machine learning model **112).** Note that the first machine learning model **112** can be trained to detect both laptops/electronic devices in luggage and LAGs. This is however not limitative. In the description, usage of the first machine learning model **112** to determine the presence of LAG(s) will be referred to, but it has to be understood that a different machine learning model can be used.

The first machine learning model **112** can determine presence of at least one LAG, and whether the presence of the LAG(s) meets a security criterion.

Note that the security criterion can depend on the regulation and/or on the requirements of each airport and can vary depending on the location and/or the time.

In some examples, the security criterion dictates the following non-limitative rules (as illustrated in **Figs. 10A** to **10E****):**
- LAGs with a capacity above 100mL should trigger an alarm even if they are located alone in the bin (and *a fortiori* if they are located within luggage);
- LAGs with a capacity below 100mL, or equal to 100mL, which are located within, below or on luggage of a fourth category, should trigger an alarm. However, LAGs with a capacity below 100mL, or equal to 100mL, which are located within a re-sealable, transparent plastic bag, or within a toiletry bag, should not trigger an alarm (the same applies when the LAGs are located below these bags, or on these bags). In other words, the fourth category does not include re-sealable, transparent plastic bags, or toiletry bags. Note that this can depend on the airports, and certain airports can consider this scenario (presence of LAG with a capacity below 100mL, or equal to 100mL, in a transparent bag, or in a toiletry bag) as a prohibited scenario;
- LAGs with a capacity below 100mL, or equal to 100mL, which are not located within, below or on luggage of a fourth category, should not trigger an alarm.

The first machine learning model **112** receives the image acquired by the acquisition device and determines the corresponding scenario.

In at least some cases, the first machine learning model **112** can determine presence of a LAG, which does not meet the security criterion.

The method of **Fig. 11** further includes (operation **1115),** responsive to a determination of the presence of LAG(s) which do not meet the security criterion, triggering an alarm. The alarm can be of a third type. In particular, this alarm (of the third type) can be configured to inform an operator that a LAG whose presence does not meet the security criterion, is present in the image. The alarm can correspond to a textual and/or audio and/or video alarm.

In some examples, the method can include outputting data informative of the capacity of the detected LAG. For example, the method can indicate that a LAG with a capacity above the authorized threshold has been detected. This data can be provided with the alarm.

In some examples, the method can include indicating that a LAG with a capacity below or equal to the authorized threshold has been detected within, below or on luggage of the fourth category. This data can be output with the alarm. In some examples, the fourth category includes all bags except re-sealable, transparent plastic bags, or small bags such as toiletry bags.

In some examples, the method can include outputting data informative of the capacity of the detected LAG(s) (the data can indicate whether the capacity of the LAG(s) meets the threshold), the number of LAG(s), their location in the image, etc. This data can be output with the alarm.

In at least some cases, the first machine learning model **112** can determine absence of LAG(s), or presence of one or more LAG(s), such that they all meet the security criterion. In this scenario, an alarm of the third type (which would have been raised when unauthorized LAGs are present) is not raised (operation **1116).**

In some cases, this means that that the passenger is authorized to go through the security checkpoint (operation **1117).**

In some cases, the method includes further processing (operation **1118)** the image to detect presence of potential prohibited objects. This can include feeding the image to the second algorithm **113** (such as second machine learning model **113),** to determine the presence of a suspicious element. This can be performed automatically, without requiring intervention of the operator. If the second machine learning model **113** detects the presence of a suspicious element, an alarm of a second type is raised (operation **1119).** This alarm can indicate to the operator that a suspicious element is present. The operator can then perform a manual check to verify whether the suspicious elements correspond to a prohibited object. In some examples, the second machine learning model **113** can indicate the location of the suspicious element(s) in the image, an estimate of the type(s) thereof, or other attributes. If the second machine learning model **113** does not detect presence of any prohibited object (such as explosives), an alarm of the second type is not raised.

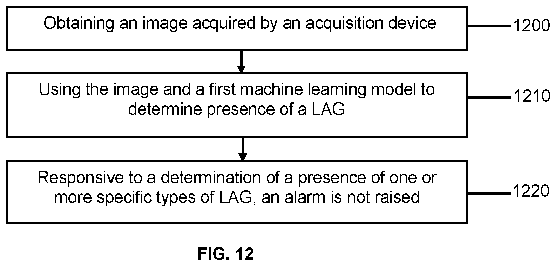

Attention is now drawn to **Fig. 12****.**

The method of **Fig. 12** includes obtaining (operation **1200)** at least one image (or more) acquired by an acquisition device and using the image and the first machine learning model **112,** or another machine learning model (distinct from the first machine learning model **112),** to determine presence of a LAG (operation **1210)** in the image.

It has been explained with reference to **Fig. 11****,** that the presence of a LAG which does not meet the security criterion triggers an alarm of the third type (see operation **1115** in **Fig. 11****).**

In some cases, responsive to a determination of the presence of one or more specific types of LAG(s), an alarm is not raised (operation **1220).**

For example, if a lighter (its capacity is below the threshold of 100mL) is detected in luggage (which does not correspond to a re-sealable, transparent plastic bag, or to a small bag such as toiletry bag), an alarm is not raised (although for other liquids with a capacity below 100mL, an alarm would have been raised, since the liquid is within, below or on luggage of the fourth category).

More generally, the user can define specific types of LAGs that do not trigger an alarm, although other types of LAGs with the same capacity will trigger an alarm. During the training of the first machine learning model **112,** training images including examples of these specific types of LAGs are fed to the first machine learning model **112,** with a label indicative that these specific types of LAGs should not trigger an alarm.

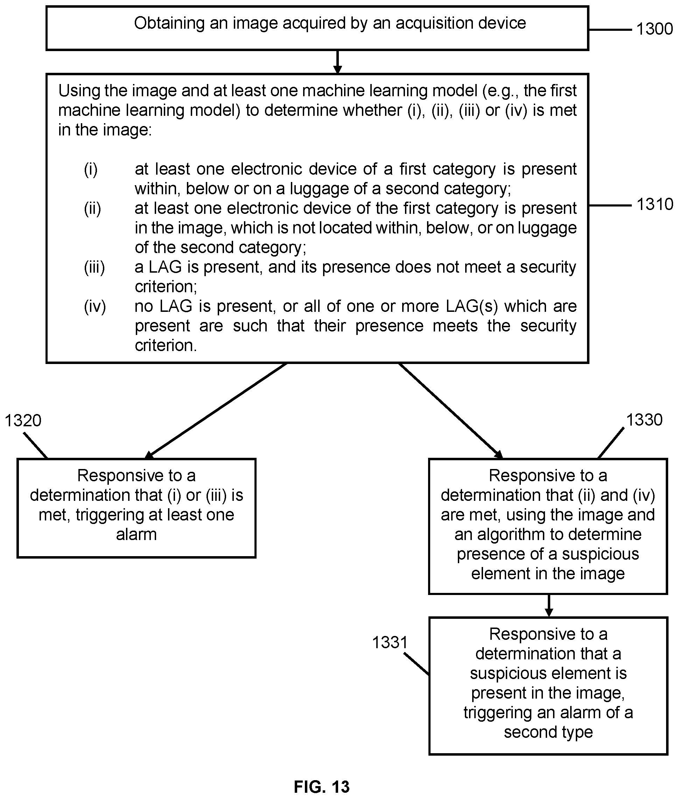

Attention is now drawn to **Fig. 13****.**

It has been described above that electronic devices in luggage (or more generally masked by an object) can be detected, in order to determine whether the image can be further processed by a second algorithm operative to detect suspicious elements (see **Figs. 3** to **9C****).** It has been also described that the presence of LAG(s), and their compatibility with a security criterion, can be automatically detected (see **Figs. 10A** to **12****).**

**Fig. 13** describes a method which combines the two solutions, which can operate in parallel (or sequentially). An automatic processing of the images, which takes into account both the presence of electronic devices in luggage (or in objects), and the presence of LAG(s), is proposed, thereby improving detection of prohibited objects and security.

The method of **Fig. 13** includes obtaining (operation **1300)** at least one (or more) image of an item (see reference **105** in **Fig. 1****)** acquired by an acquisition device (see reference **101** in **Fig. 1****).**

The method of **Fig. 13** further includes (operation **1310)** feeding the image (or data informative thereof) to at least one machine learning model. In some examples, it corresponds to the first machine learning model **112,** which is trained to both detect electronic devices in luggage, and whether the presence of LAGs meets the security criterion. In other examples, it is possible to use two distinct machine learning models: a first machine learning model is trained to detect electronic devices in luggage, and the second machine learning model is trained to determine the presence of LAGs, and whether this presence meets the security criterion.

The method of **Fig. 13** is described hereinafter with the first machine learning model **112** performing the two tasks, but it has to be understood that two distinct machine learning models can be used, as mentioned above.

The first machine learning model **112** can output different data informative of the item **105** which is currently screened.

In at least some cases, the first machine learning model **112** can determine that at least one electronic device of a first category is present within, below, or on luggage of a second category. This scenario corresponds e.g., to the scenario of **Fig. 2A****,** which is prohibited according to airport regulations. This scenario is designated as (i) hereinafter.

In at least some cases, the first machine learning model **112** can determine that at least one electronic device of the first category is present in the image, which is not located within, below, or on luggage of the second category. This scenario is designated as (ii) hereinafter. This scenario corresponds e.g., to the scenario of **Fig. 2B****,** which is allowed according to airport regulations.

In at least some cases, the first machine learning model **112** can determine the presence of LAG(s) which do not meet the security criterion. This scenario is designated as (iii) hereinafter. This scenario corresponds, e.g., to **Figs. 10A** to **10C****,** which depict different cases allowed by airport regulations.

In at least some cases, the first machine learning model **112** can determine that no LAG is present, or that all LAG(s) which are present are such that their presence meets the security criterion. This scenario is designated as (iv) hereinafter. This scenario corresponds, e.g., to **Figs. 10D** and **10E****,** which depict different cases allowed by airport regulations.

If scenario (i) and/or scenario (iii) is identified by the first machine learning model **112,** an alarm is raised (operation **1320).** Note that the alarm can be informative of the type of scenario: it can indicate whether scenario (i) is present, or whether scenario (iii) is present, or whether both scenarios (i) and (iii) are present. This helps the operator to understand why an alarm has been raised, and how he should react. If scenario (i) has been identified, this indicates that an electronic device has to be removed from the luggage, and if scenario (iii) has been identified, this indicates that a LAG has to be removed.

In some examples, for each scenario, the method can include providing further data to the operator. As mentioned above, in the case of scenario (i), the method can include outputting information on the type of the electronic device that has been detected in luggage, and/or data informative of a number of one or more electronic devices of the first category, each present in luggage of the second category, and/or information on the different types of electronic devices that have been detected in luggage (or below the luggage, or on the luggage), and/or data informative of a location of the electronic device of the first category in the image (a bounding box in the image).

In the case of scenario (ii), the method can include outputting data informative of the capacity of the detected LAG(s), and/or outputting that a LAG with a capacity below or equal to the authorized threshold, has been detected within or below luggage of the fourth category, and/or the number of LAG(s), and/or their location in the image, etc.

If scenario (ii) and/or (iv) is identified by the first machine learning model **112,** the method can further include feeding (operation **1330)** at least part of the image to the second algorithm **113** (e.g., second machine learning model **113),** to determine the presence of a suspicious element (which may correspond to a prohibited object). This can be performed automatically, without requiring intervention of the operator.

If the second algorithm **113** detects presence of a suspicious element, an alarm of a second type is raised (operation **1331).** This alarm can indicate to the operator that a suspicious element is present, which should therefore be inspected by the operator, in order to verify whether it corresponds to a prohibited object. In some examples, it can indicate the location of the suspicious element in the image, an estimate of its type, or other attributes. If the second algorithm **113** does not detect presence of any suspicious element, an alarm of the second type is not raised.

The second algorithm **113** can be fed with data informative of the electronic device(s) that have been detected, such as type, location, number, etc. This data can be used by the second algorithm **113** as an input to better determine the presence of suspicious elements in the image, as already explained above.

In some examples, it can be determined by the first machine learning model **112** that the image includes only LAG(s) with a capacity below or equal to the authorized threshold, located within permitted bag(s) or outside of bag(s), and that the image does not include additional bags and/or electronic devices to be analysed by the second algorithm **113.** In this case, it is not necessary to further process the image with the second algorithm **113,** and it is possible to allow the passenger to go through the security checkpoint.

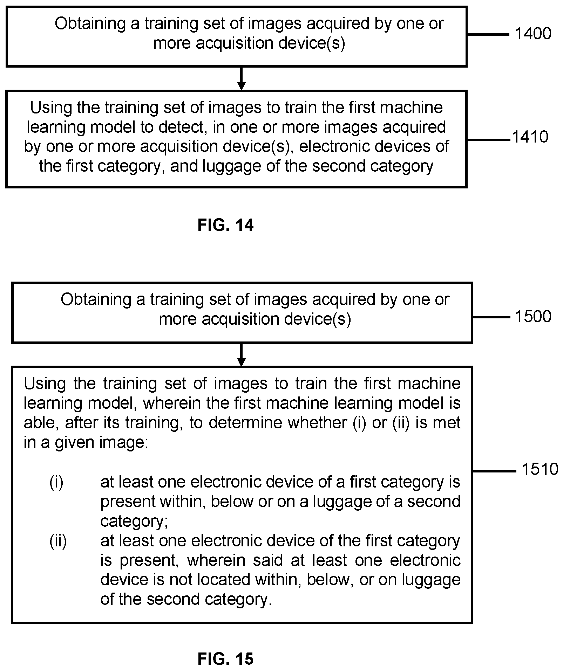

Attention is now drawn to **Fig. 14****,** which depicts a first method of training the first machine learning model **112.**

The method includes obtaining (operation **1400)** a training set of images acquired by one or more acquisition device(s).

The method can include using (operation **1410)** the training set of images to train the first machine learning model **112** to: (1) detect electronic device(s) of the first category (as defined above, such as laptops), (2) detect luggage of the second category (as defined above).

The training set can therefore include various training images of electronic devices of the first category.

Each training image containing an electronic device of the first category can be associated with a label. The label indicates that the training image contains an electronic device of the first category, and the position of the electronic device in the training image.

Note that the training set can include training images which include electronic devices which do not belong to the first category, or which do not include any electronic device. Each of these training images can include a label which indicates that no electronic device of the first category is present in these images.

The training set can also include various images of luggage of the second category. Each training image containing luggage of the second category can be associated with a label. The label indicates that the training image contains luggage of the second category, and the position of the luggage in the training image.

Note that the training set can include training images which include luggage which does not belong to the second category, or images which do not include any luggage. Each of these training images can include a label which indicates that no luggage of the second category is present in these images.

In some examples, at least some of the training images can include images of bags (laptop bags or laptop backpacks) specifically designed for laptops. The label can indicate the position of these bags in the images and can indicate that they do not correspond to luggage of the second category.

The training set (training images and labels) is fed to the first machine learning model **112** for its training. Training methods such as Backpropagation can be used. This is however not limitative.

After its training, the first machine learning model **112** is able to receive an image acquired by an acquisition device, and to determine the location of: (1) electronic device(s) of the first category in the image and (2) luggage of the second category in the image.

If the location of at least one electronic device of the first category coincides with the location of at least one item of luggage of the second category, scenario (i) is detected.

If an electronic device of the first category has been detected, but its location does not coincide with the location of at least one item of luggage of the second category, scenario (ii) is detected.

Note that this comparison of locations can be performed by the first machine learning model **112** itself, or by another computer-implemented function module which uses the detection data provided by the first machine learning model **112.**

Attention is now drawn to **Fig. 15****,** which depicts a second method of training the first machine learning model **112.**

In this method, a training set of training images (acquired by one or more acquisition devices) is obtained (operation **1500).** Each training image is labelled with one of the following labels:
- First label: at least one electronic device of the first category is present within, below or above luggage of the second category - the label can indicate the area of the image in which the electronic device is located;
- Second label: at least one electronic device of the first category is present, but it is not located within, below, or above luggage of this second category - the label can indicate the area of the image in which the electronic device is located.

In some examples, at least some of the training images can include images of bags (laptop bags or laptop backpacks) specifically designed for laptops, in which laptops are present (or not present). These training images are labelled with the second label.

The method further includes using (operation **1510)** the training set to train the first machine learning model. Training methods such as Backpropagation, or other methods, can be used.

After its training, the first machine learning model is able to automatically determine whether (i) or (ii) is met in a given image:
- (i) at least one electronic device of the first category is present within, below, or above luggage of the second category;
- (ii) at least one electronic device of the first category is present in the image, which is not located within, below, or on luggage of the second category.

Note that all the training methods can be used similarly to train the first machine learning model **112** to detect presence of electronic devices of the first category located below, within or on objects of the third category.

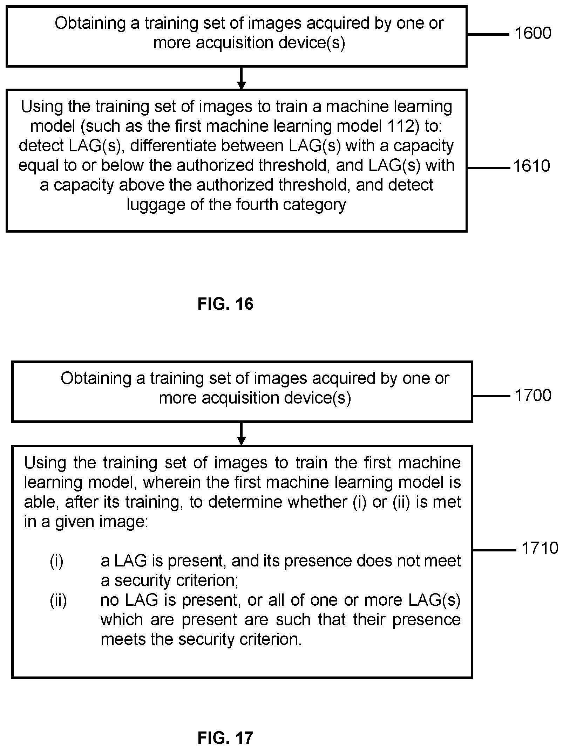

Attention is now drawn to **Fig. 16****,** which depicts a first method of training a machine learning model (such as the first machine learning model **112,** or another machine learning model), in order to detect LAGs(s) in images, and whether their presence meets a security criterion (as explained above).

The method includes obtaining (operation **1600)** a training set of images acquired by one or more acquisition device(s).

The method can include using (operation **1610)** the training set of images to train the machine learning model (such as the first machine learning model **112)** to: (1) detect LAG(s), and differentiate between LAG(s) with a capacity equal to or below the authorized threshold, and LAG(s) with a capacity above the authorized threshold; (2) detect luggage of the fourth category (as defined above).

The training set can therefore include various training images of LAG(s) of different capacities.

Each training image containing a LAG can be associated with a label. The label indicates that the training image contains a LAG, the position of the LAG in the training image, and whether its capacity is equal to or below the authorized threshold, or above the authorized threshold.

Note that the training set can include training images which do not include any LAG. Each of these training images can be associated with a label which indicates that no LAG is present in these training images.

In some examples, the training set can include training images including specific types of LAGs (as explained with reference to **Fig. 12****),** such as lighters (or other LAGs which can be defined by the user). A label can indicate that these training images include specific types of LAGs, and their corresponding location in the image.

The training set can also include various images of luggage of the fourth category. Each training image containing luggage of the fourth category can be associated with a label. The label indicates that the training image contains luggage of the fourth category, and the position of the luggage in the training image.

Note that the training set can include training images which include luggage which does not belong to the fourth category, or which do not include any fourth category. Each of these training images can include a label which indicates that no luggage of the fourth category is present in these images.

In some examples, at least some of the training images can include images including re-sealable, transparent plastic bags, and/or small bags such as toiletry bags. The label can indicate the position of these bags in the images and can indicate that they do not correspond to luggage of the fourth category. Indeed, as mentioned above, in at least some airports, it is allowed to carry LAG(s) with a capacity equal to or below the authorized threshold in re-sealable, transparent plastic bags, and/or small bags such as toiletry bags.

The training set (training images and labels) is fed to the machine learning model (such as the first machine learning model **112)** for its training. Training methods such as Backpropagation can be used. This is however not limitative.

After its training, the machine learning model (such as the first machine learning model **112)** is able to receive an image acquired by an acquisition device, and to: (1) determine the location of LAG(s) (and to differentiate between LAG(s) with a capacity equal to or below the authorized threshold, and LAG(s) with a capacity above the authorized threshold), and (2) determine the location of luggage of the fourth category in the image.

The detection data provided by the trained machine learning model can be used to verify whether the presence of LAG(s) meets the security criterion.

When a LAG with a capacity above the authorized threshold is detected, an alarm is raised.

When a LAG with a capacity equal to, or below the authorized threshold is detected in the image, and luggage of a fourth category is detected in the image, it is determined whether the location of the LAG and the location of the luggage match. If there is a match, an alarm is raised. If there is a mismatch, an alarm is not raised.

Note that this comparison of locations can be performed by the machine learning model (such as the first machine learning model **112)** itself, or by another computer-implemented function module which uses the detection data provided by the machine learning model (such as the first machine learning model **112).**

Attention is now drawn to **Fig. 17****,** which depicts a second method of training a machine learning model (such as the first machine learning model **112,** or another machine learning model), in order to detect LAGs(s) in images, and whether their presence meets a security criterion (as explained above).

In this method, a training set of training images (acquired by one or more acquisition devices) is obtained (operation **1700).** Each training image is labelled with one of the following labels:
- First label - the security criterion is not met. For example, this can correspond to training images in which LAG(s) with a capacity above the authorized threshold are present, and/or to training images in which LAG(s), with a capacity equal to or below the authorized threshold, are present within or below luggage of the fourth category;
- Second label - the security criterion is met. For example, this can correspond to training images in which no LAG(s) are present, and/or to training images in which LAG(s), with a capacity equal to or below the authorized threshold, are present within, below, or on re-sealable, transparent plastic bags, and/or small bags such as toiletry bags.

The method further includes using (operation **1710)** the training set to train a machine learning model (such as the first machine learning model **112).** Training methods such as Backpropagation, or other methods, can be used.

After its training, the machine learning model is able to automatically determine whether the image contains one or more LAGs which do not meet the security criterion, or the image does not contain LAGs, or contains LAGs which all meet the security criterion.

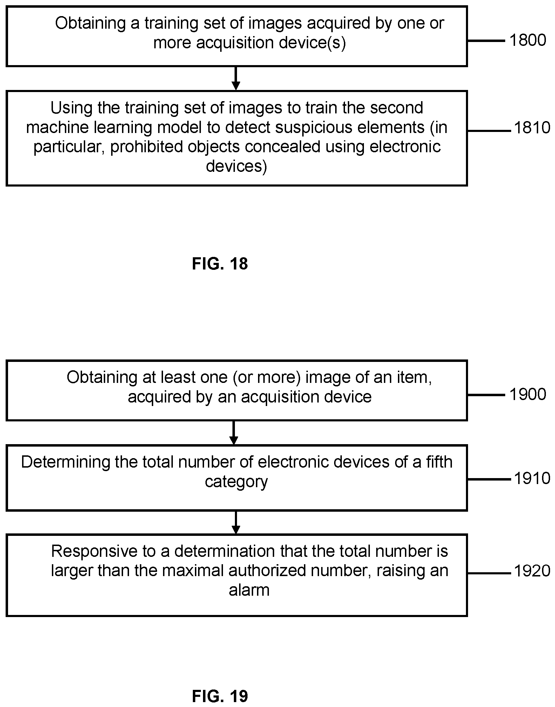

Attention is now drawn to **Fig. 18****,** which depicts a method of training the second machine learning model **113.**

The method of **Fig. 18** includes obtaining (operation **1800)** a training set of training images (acquired by one or more acquisition devices). At least some of the training images include electronic devices (such as laptops) in which one or more prohibited objects (such as explosives) are concealed. Each of these training images is associated with a label that indicates the location of the prohibited objects in the image. In some examples, the label can indicate the type of prohibited object (explosives, weapons, etc.). This label can be obtained based on the input of an operator. Some of the training images can include electronic devices in which no prohibited object is concealed. Some of the training images can be free of electronic devices. These training images can be associated with a label which indicates the absence of prohibited objects.

The method further includes using (operation **1810)** the training set (training images with labels) to train the second machine learning model **113.** Training methods such as Backpropagation, or other methods, can be used.

After its training, the second machine learning model **113** is able to identify the presence of suspicious elements (which have a certain likelihood to correspond to prohibited objects) in one or more images. In particular, it can identify the presence of suspicious elements concealed using electronic devices.

In some examples, the second machine learning model **113** can provide an estimate of the type of prohibited object identified in the image.

In some examples, the first machine learning model **112** and/or the second machine learning model **113** can be retrained periodically, using e.g., the real images acquired during operation, and the feedback of an operator (who can indicate whether the output of the first machine learning model **112** and/or the second machine learning model **113** are correct).

Attention is now drawn to **Fig. 19****.**

In some regulations, there is a limit on the maximal number of electronic devices that a passenger can carry. For example, in some regulations, each passenger may carry a maximal number of electronic devices with a battery, up to fifteen in number. The method of **Fig. 18** can be used to ensure that this regulation is respected by the passengers.

The method can include obtaining (operation **1900)** at least one or more images of an item (see reference **105** in **Fig. 1****)** acquired by an acquisition device (see reference **101** in **Fig. 1****).**

The method of **Fig. 19** further includes (operation **1910)** feeding the image (or data informative thereof) to a machine learning model, such as the first machine learning model **112.**

The first machine learning model **112** can detect electronic devices belonging to a fifth category, present in the image. The fifth category can correspond to electronic devices with a battery. The first machine learning model **112** can determine the number of electronic devices present in the image.

If this number is below or equal to the maximal number of electronic devices authorized for a single passenger, an alarm is not raised.

If this number is larger than the maximal number of electronic devices authorized for a single passenger, an alarm is raised (operation **1920).** The alarm can be configured to inform an operator that the passenger carries a number of electronic devices which exceeds the authorized number. The alarm can correspond to a textual and/or audio and/or video alarm.

In the detailed description, numerous specific details have been set forth in order to provide a thorough understanding of the disclosure. However, it will be understood by those skilled in the art that the presently disclosed subject matter may be practiced without these specific details. In other instances, well-known methods, procedures, components, and circuits have not been described in detail so as not to obscure the presently disclosed subject matter.

Unless specifically stated otherwise, as apparent from the aforementioned discussions, it is appreciated that throughout the specification discussions utilizing terms such as "obtaining", "using", "determining", "performing", "outputting", "training", "triggering", or the like, refer to the action(s) and/or process(es) of at least one processing circuitry that manipulates and/or transforms data into other data, said data represented as physical, such as electronic, quantities and/or said data representing the physical objects.

The terms "computer" or "computer-based system" should be expansively construed to include any kind of hardware-based electronic device with a data processing circuitry (e.g., digital signal processor (DSP), a GPU, a TPU, a field programmable gate array (FPGA), an application specific integrated circuit (ASIC), microcontroller, microprocessor etc.), including, by way of non-limiting example, the computer-based system **103** of **Fig. 1** and respective parts thereof disclosed in the present application. The data processing circuitry (designated also as processing circuitry) can comprise, for example, one or more processors operatively connected to computer memory, loaded with executable instructions for executing operations, as further described below. The data processing circuitry encompasses a single processor or multiple processors, which may be located in the same geographical zone, or may, at least partially, be located in different zones, and may be able to communicate together. The one or more processors can represent one or more general-purpose processing devices such as a microprocessor, a central processing unit, or the like. More particularly, a given processor may be one of: a complex instruction set computing (CISC) microprocessor, a reduced instruction set computing (RISC) microprocessor, a very long instruction word (VLIW) microprocessor, a processor implementing other instruction sets, or a processor implementing a combination of instruction sets. The one or more processors may also be one or more special-purpose processing devices such as an application specific integrated circuit (ASIC), a field programmable gate array (FPGA), a digital signal processor (DSP), a network processor, or the like. The one or more processors are configured to execute instructions for performing the operations and steps discussed herein.

The memories referred to herein can comprise one or more of the following: internal memory, such as, e.g., processor registers and cache, etc., main memory such as, e.g., read-only memory (ROM), flash memory, dynamic random access memory (DRAM) such as synchronous DRAM (SDRAM) or Rambus DRAM (RDRAM), etc.

The terms "non-transitory memory" and "non-transitory computer readable medium" used herein should be expansively construed to cover any volatile or nonvolatile computer memory suitable to the presently disclosed subject matter. The terms should be taken to include a single medium or multiple media (e.g., a centralized or distributed database, and/or associated caches and servers) that store the one or more sets of instructions. The terms shall also be taken to include any medium that is capable of storing or encoding a set of instructions for execution by the computer and that cause the computer to perform any one or more of the methodologies of the present disclosure. The terms shall accordingly be taken to include, but not be limited to, a read only memory ("ROM"), random access memory ("RAM"), magnetic disk storage media, optical storage media, flash memory devices, etc.

It is to be noted that while the present disclosure refers to the processing circuitry **104** being configured to perform various functionalities and/or operations, the functionalities/operations can be performed by the one or more processors of the processing circuitry **104** in various ways. By way of example, the operations described hereinafter can be performed by a specific processor, or by a combination of processors. The operations described hereinafter can thus be performed by respective processors (or processor combinations) in the processing circuitry **104,** while, optionally, at least some of these operations may be performed by the same processor. The present disclosure should not be limited to be construed as one single processor always performing all the operations.

The various operations described in the different methods can include a configuration in which at least part of the operations described hereinafter are performed locally (by one or more processing circuitries located in the vicinity of the acquisition system) and/or remotely (by one or more processors of a cloud, remote server, remote computerized system(s) including one or more processing circuitries, etc.), or partially locally and partially remotely.

It is appreciated that, unless specifically stated otherwise, certain features of the presently disclosed subject matter, which are described in the context of separate embodiments, can also be provided in combination in a single embodiment. Conversely, various features of the presently disclosed subject matter, which are described in the context of a single embodiment, can also be provided separately or in any suitable subcombination. In the following detailed description, numerous specific details are set forth in order to provide a thorough understanding of the methods and apparatus.

In embodiments of the presently disclosed subject matter, fewer, more, and/or different stages than those shown in the methods of **Figs. 3****,** **4****,** **9A****,** **11****,** **12****,** and **13** to **19** may be executed. In embodiments of the presently disclosed subject matter, one or more stages illustrated in the methods of **Figs. 3****,** **4****,** **9A****,** **11****,** **12****,** and **13** to **19** may be executed in a different order, and/or one or more groups of stages may be executed simultaneously.

It is to be understood that the invention is not limited in its application to the details set forth in the description contained herein or illustrated in the drawings.

It will also be understood that the system according to the invention may be, at least partly, implemented on a suitably programmed computer. Likewise, the invention contemplates a computer program being readable by a computer for executing the method of the invention. The invention further contemplates a non-transitory computer-readable memory tangibly embodying a program of instructions executable by the computer for executing the method of the invention.

The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

Those skilled in the art will readily appreciate that various modifications and changes can be applied to the embodiments of the invention as hereinbefore described without departing from its scope, defined in and by the appended claims.

## Claims

1. A system comprising one or more processing circuitries configured to:
obtain an image acquired by an acquisition device,
use the image and a first machine learning model to determine whether (i) or (ii) is met in the image:
(i) at least one electronic device of a first category is present within, below, or on luggage of a second category;
(ii) at least one electronic device of the first category is present, wherein said at least one electronic device is not located within, below, or on luggage of the second category;
responsive to a determination that (i) is met, trigger an alarm of a first type;
responsive to a determination that (ii) is met, use at least part of the image and an algorithm different from the first machine learning model to determine whether a suspicious element is present in the at least part of the image.

2. The system of claim 1, wherein at least one of (a), (b) or (c) is met:
(a) responsive to a determination that (ii) is met, feed a sub-part of the image to the algorithm, wherein said sub-part corresponds to a location of the at least one electronic device in the image;
(b) responsive to determination that neither (i) nor (ii) are met, not raise an alarm of the first type and not feed the image to the algorithm;
(c) responsive to a determination that (i) and (ii) are met, the system is configured to both trigger an alarm of the first type and use at least part of the image and the algorithm to determine whether a suspicious element is present in the at least part of the image.

3. The system of claim 1 or of claim 2, wherein, responsive to a determination of a presence of a suspicious element in the image, the system is configured to trigger an alarm of a second type, different from said first type.

4. The system of any one of claims 1 to 3, wherein at least one of (i) or (ii) is met:
(i) the algorithm comprises a second machine learning model, distinct from the first machine learning model;
(ii) the first category comprises at least one of laptops, tablets, hairdryers, straighteners, speakers, cameras, docking stations, irons, e-readers, or game consoles.

5. The system of any one of claims 1 to 4, wherein the first machine learning model is configured to classify a scenario in which a laptop is located within, below, or on a bag specifically designed for laptops, as a scenario in which the laptop is not present within, below, or on luggage of the second category.

6. The system of any one of claims 1 to 5, wherein:
responsive to a determination that (ii) is met, the system is configured to transmit data informative of a location of the electronic device of the first category to the algorithm, wherein the algorithm is configured to use the data to determine whether a suspicious element is present in the image, or
responsive to a determination that (ii) is met, and to a determination that at least one electronic device of the first category is present in the image, the system is configured to transmit data informative of a type of the electronic device of the first category to the algorithm, wherein the algorithm is configured to use the data to determine whether a suspicious element is present in the image.

7. The system of any one of claims 1 to 6, wherein:
responsive to a determination that (ii) is met, and to a determination of a type of the at least one electronic device, the system is configured to use said type to select a given algorithm among a plurality of algorithms, and to use said given algorithm to determine whether a suspicious element is present in the image, or
responsive to a determination that (ii) is met, and to a determination of a type of the at least one electronic device, the system is configured to use said type to select a given algorithm among a plurality of algorithms, and to use said given algorithm to determine whether a suspicious element is present in the image, wherein the given algorithm has been trained with images comprising electronic devices of said type.

8. The system of any one of claims 1 to 7, wherein, responsive to a determination that (i) is met, the system is configured to perform at least one of
outputting information on a type of the electronic device that has been detected, or
outputting data informative of a location of the at least one electronic device that has been detected in the image, or
outputting a total number of one or more electronic devices of the first category, each present in, below, or on luggage of the second category.

9. The system of any one of claims 1 to 8, wherein:
the first machine learning model has been trained with training images including one or more electronic devices of the first category, and associated with a label indicative of a position of the one or more electronic devices of the first category, and training images including one or more luggage items of the second category, and associated with a label indicative of a position of the one or more luggage items of the second category, or
the first machine learning model has been trained with training images including at least one electronic device of a first category present within, below, or on luggage of a second category, associated with a first label, and training images in which at least one electronic device of the first category is present, but which is not located within, below, or on luggage of the second category, associated with a second label, different from the first label.

10. The system of any one of claims 1 to 9, wherein, for an image comprising an electronic device of the first category, and luggage of the second category, the first machine learning model is configured to determine a first location of the electronic device, a second location of the luggage, wherein the first machine learning model or the system is configured to compare the first location with the second location to determine whether (i) or (ii) is met.

11. The system of any one of claims 1 to 10, configured to:
use the image and the first machine learning model to determine whether (a) or (b) is met in the image:
(a) at least one electronic device of a first category is present within, below, or on an object of a third category;
(b) at least one electronic device of the first category is present, wherein said at least one electronic device is not located within, below, or on an object of the third category;
responsive to a determination that (a) is met, trigger an alarm;
responsive to a determination that (b) is met, use at least part of the image and the algorithm to determine whether a suspicious element is present in the at least part of the image,
wherein the third category includes objects operative to mask, at least partially, an electronic device of the first category in the image.

12. The system of any one of claims 1 to 11, configured to:
use said first machine learning model, or another machine learning model, to determine whether the image comprises a Liquid, an Aerosol, or a Gel which does not comply with a security criterion, and
responsive to detection of a Liquid, an Aerosol, or a Gel which does not comply with the security criterion, trigger an alarm.

13. The system of any one of claims 1 to 12, configured to perform at least one of (i), (ii), (iii) or (iv):
(i) use said first machine learning model, or another machine learning model, to detect presence of at least one of a Liquid, an Aerosol, or a Gel, which has a capacity above a threshold,
responsive to a detection of at least one of a Liquid, an Aerosol, or a Gel, which has a capacity above the threshold, trigger an alarm;
(ii) use said first machine learning model, or another machine learning model, to detect presence of at least one of a Liquid, an Aerosol, or a Gel, with a capacity equal to or below an authorized threshold, located within or below luggage of a fourth category,
responsive to a detection of at least one of a Liquid, an Aerosol, or a Gel with a capacity equal to or below the authorized threshold, located within or below luggage of the fourth category, trigger an alarm;
(iii) use said first machine learning model, or another machine learning model, to detect presence of at least one of a Liquid, an Aerosol, or a Gel, with a capacity equal to or below an authorized threshold, located within or below authorized luggage,
wherein, responsive to a detection of at least one of a Liquid, an Aerosol, or a Gel with a capacity equal to or below the authorized threshold, located within or below authorized luggage, the system is configured to not trigger an alarm;
(iv) use said first machine learning model, or another machine learning model, to detect presence of at least one of a Liquid, an Aerosol, or a Gel, and to differentiate between:
a Liquid, an Aerosol, or a Gel with a capacity equal to or below an authorized threshold, and
a Liquid, an Aerosol, or a Gel with a capacity above an authorized threshold;
(v) use said first machine learning model, or another machine learning model, to detect presence of at least one of a Liquid, an Aerosol, or a Gel, of a certain type, and to not trigger an alarm for this certain type, wherein this certain type includes a lighter.

14. The system of any one of claims 1 to 13, configured to use the image and the first machine learning model to determine whether (i), (ii), (iii) or (iv) is met in the image:
(i) at least one electronic device of the first category is present within, below, or on luggage of the second category;
(ii) at least one electronic device of the first category is present in the image, which is not located within, below, or on luggage of the second category;
(iii) the image comprises a Liquid, an Aerosol or a Gel which does not comply with a security criterion;
(iv) no Liquid, an Aerosol, or a Gel is present, or all of one or more Liquids, Aerosols, or Gels which are present are such that their presence meets the security criterion.

15. A non-transitory computer readable medium comprising instructions that, when executed by one or more computers, cause the one or more computers to perform:
obtaining an image acquired by an acquisition device,
using the image and a first machine learning model to determine whether (i) or (ii) is met in the image:
(i) at least one electronic device of a first category is present within, below, or on luggage of a second category;
(ii) at least one electronic device of the first category is present, wherein said at least one electronic device is not located within, below, or on luggage of the second category;
responsive to a determination that (i) is met, triggering an alarm;
responsive to a determination that (ii) is met, using at least part of the image and an algorithm different from the first machine learning model to determine whether a suspicious element is present in the at least part of the image.
